# EUROPEAN PATENT APPLICATION

(11) **EP 1 710 795 A1**
(43) Date of publication of application: **11.10.2006**
(21) Application number: 05703417.5
(22) Date of filing: 11.01.2005
(51) Int. Cl.: G11B 17/028

(54) **DISK HOLDING DEVICE AND DISK CHANGER DEVICE**

(30) Priority: 26.01.2004 JP 2004017010
(71) Applicant: MATSUSHITA ELECTRIC INDUSTRIAL CO., LTD., Kadoma-shi, Osaka 571-8501 (JP)
(72) Inventor: NAKADE, Isamu c/o Matsushita Electric Ind Co., Ltd, Chuo-ku Osaka-shi Osaka 540-6319 (JP); NAKAYAMA, T. c/o Matsushita Electric Ind Co., Ltd, Chuo-ku Osaka-shi Osaka 540-6319 (JP)
(74) Representative: Balsters, Robert
(86) International application number: PCT/JP2005/000178
(87) International publication number: WO 2005/071674

(57) **Abstract**

There are provided a disk holding apparatus capable of achieving thinner-sized formation than in a background art and a disk changer apparatus having the disk holding apparatus.

In a disk holding apparatus 50 including a tray for mounting a disk D, a turn table 51 rotated by rotation driving means 52, a disk hole inserting portion 56 for taking out the disk from the tray to mount on the turn table 51, and a projected portion 58 for fixing the disk D on the turn table 51, the disk hole inserting portion 56 is inwardly inserted to be able to move up and down in a direction orthogonal to a face of mounting the disk D at inside of the turn table 51, and an inner portion of the disk hole inserting portion 56 is contained with a screw member 57 for converting a rotational force from the rotation driving means 52 to a force of vertically moving up and down the disk hole inserting portion 56.

## Description

### <Technical Field>

The present invention relates to a disk holding apparatus for making a turn table hold a disk of CD (Compact Disc), DVD (digital Versatile Disc) or the like and a disk changer apparatus having the disk holding apparatus.

### <Background Art>

There have been developed various disk recording/reproducing apparatus (hereinafter, abbreviated as disk apparatus) having a disk holding apparatus for making a turn table hold a disk and capable of recording and/or reproducing information to and from the disk.

Further, there has also known a disk changer apparatus for selecting a desired one from a plurality of sheets of disks contained in a tray in the disk apparatus (refer to, for example, Patent Reference 1).

Meanwhile, according to the disk apparatus or the disk change apparatus having the disk holding apparatus, a small-sized one is requested from a reason that not so much space cannot be occupied depending on an installing location.

Particularly, according to a vehicle-mounted type mounted on a vehicle, for example, an automobile or the like, a restriction on an installing space is severe and therefore, small-sized formation or thin-sized formation is particularly requested.

Patent Reference 1: JP-A-10-283707 (Fig.12 through Fig.14)

### <Disclosure of the Invention>

### <Problems that the Invention is to Solve>

However, according to a disk changer apparatus having a disk holding apparatus described in Patent Reference 1, as shown by Fig.11, a disk holding apparatus 101 is inserted along with a chassis 103 into a gap G between a disk D1 contained at a desired tray 104 and a disk D2 right therebelow, the disk holding apparatus 101 having a turn table 102 and a disk hole inserting portion 102A is generally bulky and therefore, also a dimension S₀ in a height direction of the gap G necessary for inserting the disk holding apparatus 101 is also increased.

That is, according to the disk holding apparatus 101, when the desired disk D1 is mounted to the turn table 102, normally, it is necessary that the disk holding apparatus 101 comes into the gap G between the disk D1 and the disk D2 right therebelow and the disk hole inserting portion 102A projected at a center portion of the turn table 102 is inserted to a center hole (hole at a center portion) of the desired disk D1 from below.

However, according to a constitution of the disk holding apparatus 101, generally, the disk hole inserting portion 102A is projected to the turn table 102 in a state of being fixed and therefore, it is necessary to ensure a large length in an up and down direction of the gap G by an amount of projecting the disk hole inserting portion 102A and in accordance therewith, also a height dimension of a total of the disk holding apparatus 101 is increased.

The invention has been carried out in view of the above-described situation and it is an object thereof to provide a disk holding apparatus capable of achieving thinner-sized formation than in the background art and a disk changer apparatus having the disk holding apparatus.

### <Means for Solving the Problems>

A disk holding apparatus of the invention comprises a turn table for mounting a disk, and a disk hole inserting portion provided at a center portion of the turn table and inserted into a center hole of the disk, wherein the disk hole inserting portion is constructed by a constitution in which the disk hole inserting portion is provided at the turn table in a state of being able to move up and down relative to a face of the turn table for mounting the disk.

According to the constitution, the disk hole inserting portion is constituted to be able to be contained at inside of the turn table and thin-sized formation of a total of the disk holding apparatus can be achieved.

That is, when the disk hole inserting portion is moved to a lower side (side of recording face) of the disk, during a time period until reaching a center hole position (center hole) of the disk, the disk hole inserting portion can be moved in a state of constituting thin-sized formation by containing the disk hole inserting portion at inside of the turn table and therefore, a dimension of a gap between the turn table and the disk can be minimized.

Further, the disk holding apparatus of the invention includes rotation driving means for rotating the turn table and the disk hole inserting portion is constructed by a constitution of being inwardly inserted with converting means for converting a rotational force from the rotation driving means to a force of moving up and down the disk hole inserting portion.

According to the constitution, the converting means is contained at inside of the disk hole inserting portion and therefore, also a height dimension can be reduced by that amount.

Further, according to the constitution, by installing the converting means, a drive source of rotating the turn table can be used also as a drive source of the operation of moving up and down the disk hole inserting portion and therefore, further small-sized formation, light-weighted formation can be achieved.

Further, according to the disk holding apparatus of the invention, the converting means is constructed by a constitution of including a screw member for screwing a side of the driving means and a side of the disk hole inserting portion.

According to the constitution, the converting means can be constituted by a simple constitution.

Further, according to the disk holding apparatus of the invention, the converting means is constructed by a constitution of including a female screw portion formed at a peripheral face of an inner hole provided at the disk hole inserting portion, a male screw portion formed at an outer peripheral face of the screw member and screwed to the female screw portion, and rotation stopping means for temporarily stopping an operation of rotating the turn table.

According to the constitution, the converting means comprising both of the female and the male screw portions for moving up and down the disk hole inserting portion by extruding operation by screws constituting a power source by a force of rotating the screw members (for example, in a case of one streak screw normally used, the disk hole inserting portion is linearly moved in an axis center direction by one pitch by one rotation of the screw member) can be formed by the inner hole and the screw member having simple constitutions.

Further, according to the disk holding apparatus of the invention, the converting means is constructed by the constitution including the female screw portion formed at the peripheral face of the inner hole provided at the disk hole inserting portion, the male screw portion formed at the outer peripheral face of the screw member and screwed to the female screw portion, and the rotation stopping means for temporarily stopping the operation of rotating the turn table.

According to the constitution, not only the disk on the turn table can firmly be fixed by the rotation stopping means but also the rotation stopping means can be operated without needing an exclusive drive source and therefore, small-sized formation, light-weighted formation of the apparatus can further be achieved.

Further, a disk changer apparatus of the invention is constructed by a constitution including a plurality of trays for containing a disk, turn table transferring means for moving a turn table for mounting the disk at a lower portion of one tray of the plurality of trays, and any one of the disk holding apparatus.

According to the constitution, the disk hole inserting portion of the disk holding apparatus is constituted to be able to be contained at inside of the turn table and a dimension in a height direction or the like is not enlarged. Therefore, thin-sized formation of a total of the disk holding apparatus can be achieved and therefore, the disk changer apparatus capable of being constituted by thin-sized formation can be provided.

### <Advantage of the Invention>

According to the invention, there can be provided the disk holding apparatus capable of mounting the disk to be reproduced or recorded on the turn table in the state of being further proximate thereto by containing the disk hole inserting portion to be able to move and up and down relative to the face of mounting the disk at inside of the turn table and achieving an effect of constituting a total of the apparatus by thinner-sized formation than in the background art and the disk changer apparatus having the disk holding apparatus.

### <Brief Description of the Drawings>

Fig.1 is a plane view showing a standby state of a disk changer apparatus according to an embodiment of the invention.
Fig.2(A) is a plane view showing a standby state of a disk holding apparatus according to an embodiment of the invention, (B) is a sectional view taken along a line α-α of the disk holding apparatus shown in (A).
Fig.3 illustrates sectional views enlarging to show a periphery of a projected portion of the disk holding apparatus,
   (A) is a sectional view taken along the line α-α of Fig.2 (A),
   (B) is a sectional view taken along a line β-β of Fig.2(A).
Fig.4(A) is a plane view showing a state in playing of the disk holding apparatus according to the embodiment of the invention, (B) is a sectional view taken along the line α-α of the disk holding apparatus shown in (A).
Fig.5 is a sectional view enlarging to show a periphery of the projected portion of the disk holding apparatus, (A) is a sectional view taken along the line α-α of Fig.4 (A). (B) is a sectional view taken along the line β-β of Fig.4(A).
Fig.6 is an outline sectional view showing a state in which the disk holding apparatus of the disk changer apparatus according to the embodiment of the invention is inserted between disks of a tray portion.
Fig.7 is a plane view showing a state when the disk holding apparatus is inserted between the disks of the tray portion.
Fig.8 is an outline sectional view showing a state in which the tray portion is moved down from the state of Fig.6 to be mounted on a turn table.
Fig.9 is an outline sectional view showing a state in playing in which the tray portion is moved further from the state of Fig.8 and the disk becomes free.
Fig.10 is a plane view showing a state in playing of the disk changer apparatus according to the embodiment of the invention.
Fig.11 is an outline sectional view showing a state in mounting a disk by a disk holding apparatus of a background art.

### <Best Mode for Carrying Out the Invention>

An embodiment of the invention will be explained in details in reference to the attached drawing as follows.

First, a constitution of a disk changer apparatus according to the embodiment of the invention will be explained.

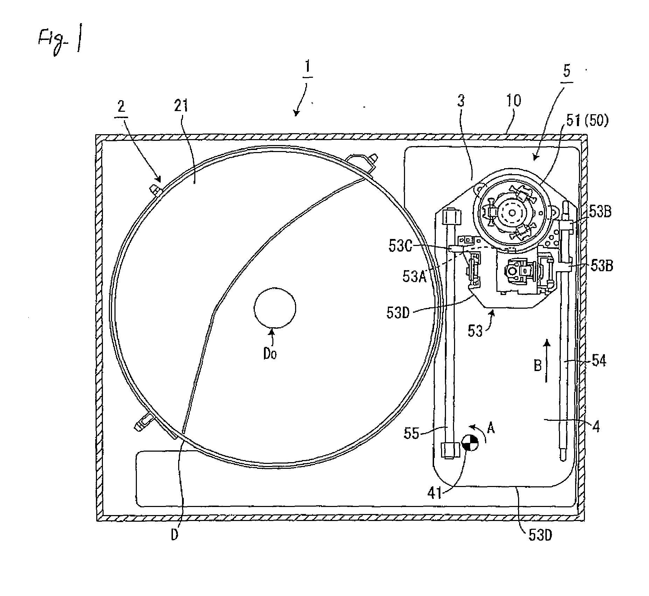

As shown by Fig.1, the disk changer apparatus 1 according to the embodiment is provided with the tray portion 2 having a plurality of trays (in Fig.1, only a topmost one is seen) 21 laminated at inside of the cabinet 10 movably to each other in a laminating direction, tray opening/closing means, not illustrated, for opening- and closing an interval between predetermined ones of the trays 21, the base 3 as a base portion movable in a direction indicated by an arrow mark A relative to the cabinet 10, the chassis 4 installed at the base 3 in a state of being pivotable in the direction indicated by the arrow mark A centering on the pivoting shaft 41 relative to the base 3, the playing portion 5 mounted to the chassis 4 and constituting means for reproducing information recorded on the disk D.

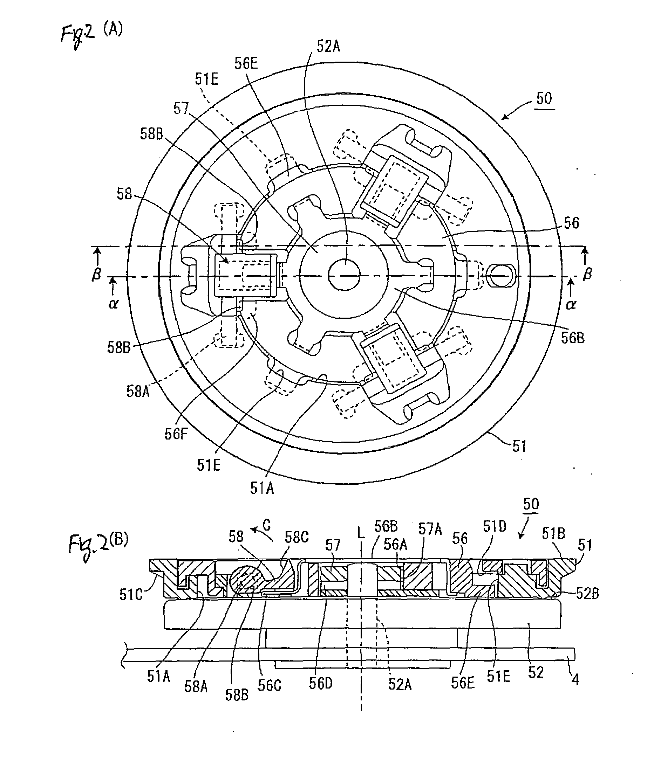

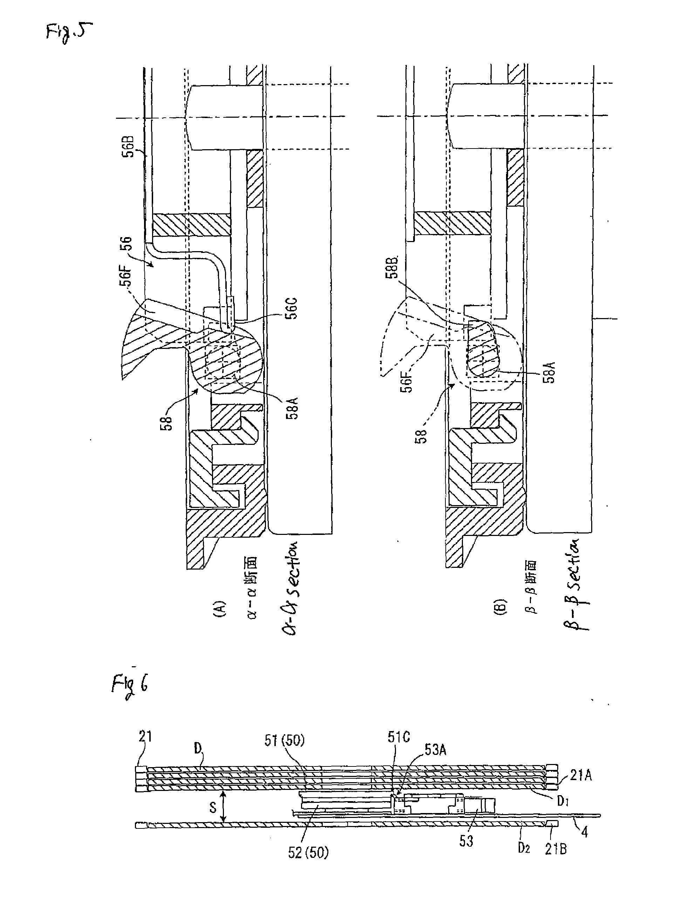

Among them, the playing portion 5 is provided with the disk holding apparatus 50 having the turn table 51 mounted with a desired one of the disk D1 (refer to Fig.6) and rotated by the rotation driving means 52 as shown by Figs. 2 (A), (B), the pickup 53 installed movably in a direction indicated by an arrow mark B substantially orthogonal to a direction of extending the pivoting shaft 41 of the chassis 4 and making access to the disk D1 mounted on the turn table 51, the lead screw (preferably constituted by a ball screw for smoothly feeding finely) 54 for operating to slide the pickup 53 in the arrow mark B direction, and a guide shaft 55 installed in parallel with the lead screw 54 for guiding to operate to slide the pickup 53.

As shown by Figs.2(A), (B), the turn table 51 is constituted to rotate integrally with a rotating center shaft 52A of the rotation driving means 52, a center portion thereof is provided with the hole-portion 51A and the hole portion 51A is inserted with the disk hole inserting portion 56, mentioned later, movably in an up and down direction.

That is, the hole portion 51A of the turn table 51 is engaged with the disk hole inserting portion 56, and the disk hole inserting portion 56 is engaged with an outer peripheral face of the disk hole inserting portion 56 and permitted to rotate integrally therewith in a peripheral direction of the hole portion 51A. Speaking conversely, a rotational operation of the disk hole inserting portion 56 relative to the turn table 51 is constrained and it is prohibited to rotate only the disk hole inserting portion 56 freely by itself relative to the turn table 51. On the other hand, the disk hole inserting portion 56 can be moved relative to the hole portion 51A freely in an up and down (moving up and down) direction in an axis line L direction (up and down direction of Fig. 2 (B)) of the turn table 51.

Therefore, as shown by Figs.2(A), (B), the turn table 51 of the embodiment is inscribed with a plurality (three portions) of the vertical grooves 51E in parallel with an axial direction at an inner peripheral face of the hole portion 51A and an outer peripheral face of the disk hole inserting portion 56 is formed with a plurality of pieces (three pieces) of the projected streaks 56E engaged with the vertical grooves 51E in the same direction.

Inside of the hole portion 51A of the turn table 51 substantially in a' shape of a circular cylinder is installed with the disk hole inserting portion 56 substantially in a shape of a circular column inserted into a center hole of the disk D (center hole) D₀ (refer to Fig.1) and in Fig.2 (B), a plurality (three) of the projected portions 58 pivotable in an arrow mark C direction are arranged in an erectable state by constituting fulcra by the shaft portions 58A. Further, the outer peripheral face of the turn table is formed with the groove portion (constituting other of rotation stopping means) 51C engaged with the rotation stopper portion (constituting one of rotation stopping means) 53A installed at a front end of the pickup 53 shown in Fig.1 and Fig.6.

As shown by Fig.1, the pickup 53 is mounted on the slide plate 53D and is provided with the rotation stopper portion 53A, a slide portion 53B cut with a female screw screwed to the male screw portion of the lead screw 54 cut with the male screw, and an engaging portion 53C slidably engaged with the guide shaft 55.

Among them, the rotation stopper portion 53A temporarily hampers a rotational operation of the turn table 51 when the disk hole inserting portion 56 is operated to move up and down (rotation lock), and particularly according to the invention, the rotation stopper portion 53A is provided with a function as clutch means for converting a rotation drive force from the rotation driving-means 52 into a force of moving up and down the disk hole inserting portion 56. That is, the rotation stopper portion 53A is constituted such that when the disk hole inserting portion 56 is moved up and down, the rotation drive force from the rotation driving means 52 is not transmitted to the turn table 51 but transmitted to the disk hole inserting portion 56, and by constituting a drive source by the rotation force, the disk hole inserting portion 56 is moved in a direction orthogonal to the turn table 51 by utilizing an extruding operation by screws between two members of the disk hole inserting portion 56 and the screw member 57 screwed therewith.

For that purpose, the disk hole inserting portion 56 is formed with the inner hole 56D and the inner hole 56D is provided with the female screw portion (this constitutes one of converting means of the invention) 56A cut with a female screw at an inner peripheral face thereof. Further, the female screw portion 56A of the inner hole 56D is attached with the screw member 57 provided with the male screw portion (this constitutes other of converting means) 57A fixed to be rotated integrally with a rotation center shaft 52A of the rotation driving means 52 and cut with a male screw at an outer peripheral face thereof in a state of being screwed with each other. When the rotation lock state by the rotation stopper portion 53A is released, the rotation drive force from the rotation driving means 52 is transmitted and the screw member 57 is rotated integrally with the turn table 51.

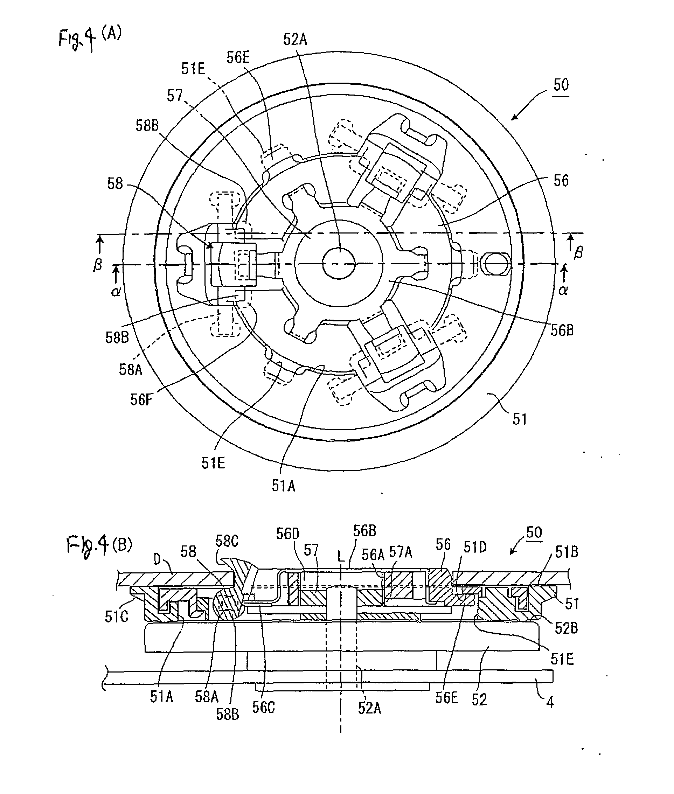

Further, a range of moving the disk hole inserting portion 56 in a direction orthogonal to the disk mounting face 51B of the turn table 51 is restricted, in operating to move up and down the disk hole inserting portion 56 in a rotational axis direction (in correspondence with an up and down direction of Fig. 2 (B)), in operating to move down the disk hole inserting portion 56, the disk hole inserting portion 56 can be moved down to a location at which a lower face of the disk hole inserting portion 56 is brought into contact with a ceiling face portion 52B of the rotation driving means 52 (state of Fig.2(B)), further, in operating to move up the disk hole inserting portion 56, the disk hole inserting portion 56 can be moved to a location at which the projected streak 56E provided along an outer edge of a lower portion of the disk hole inserting portion 56 is locked by a stopper 51D of the hole portion 51A and the disk hole inserting portion 56 erects the projected portion 58 (state of Fig.4(B)). Figs.2 (A), (B) show a state of moving down the disk hole inserting portion 56 and containing the projected portion 58, and Figs. 4 (A), (B) show a state of moving up the disk hole inserting portion 56 and erecting the projected portion 58.

Further, as shown by Figs.2(A), (B), the disk hole inserting portion 56 is installed with an urging portion 56B comprising an elastic member in a state of closing an inner hole 56D of the disk hole inserting portion 56 from above. The urging portion 56B is formed with pressing end portions 56C constituted by extending a peripheral edge portion thereof to be folded to be bent in a crank shape and disposed below the projected portions 58 by a number in correspondence with the projected portions 58.

The projected portion 58 is for being locked by the disk D by using the claw portion 58C when information is recorded and/or reproduced to and from the disk D mounted on the turn table 51 and temporarily fixing the disk D to be integrated with the turn table 51 by way of the disk hole inserting portion 56. Therefore, the projected portion 58 is constituted such that when the disk hole inserting portion 56 is moved up to a predetermined position, the projected portion 58 is fixed by the claw portion 58C for fixing which is erected in accordance with the disk hole inserting portion 56 and a side of the center hole D₀ of the disk D of which is disposed on a free end side (right upper end portion side of Fig.2(B)).

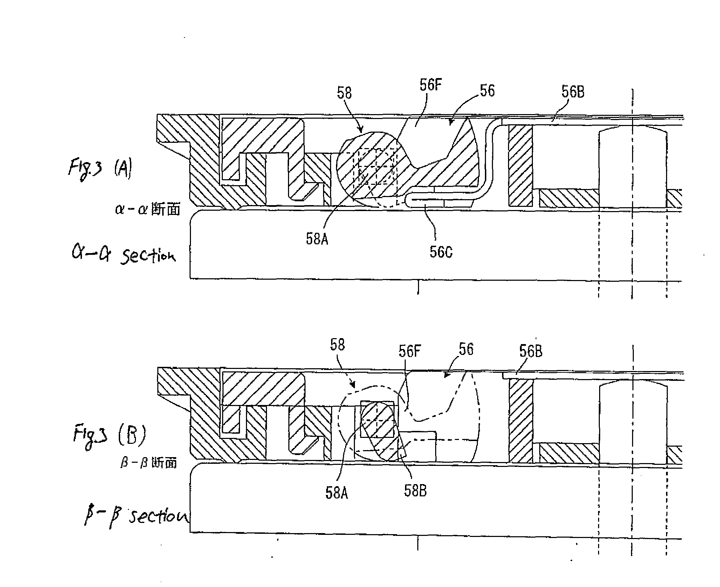

Fig.3 and Fig.5 are sectional views enlarging to show a periphery of the projected portion 58. Fig.3(A) shows a section taken along a line α-α of Fig. 2 (A) (similar to Fig. 2 (B)) and Fig. 3 (B) shows a section taken a along a line β-β of Fig. 2 (A). Further, Fig.5(A) shows a section taken along the line α-α of Fig.4(A) (similar to Fig.4(B)) and Fig.5(B) shows a section taken along the line β-β of Fig.4(A). The projected portion 58 according to the embodiment is provided with the shaft portion 58A fixedly attached to a base end side (right end portion side of Fig.2(B)) in a penetrated state and the containing projected portion 58B projected pivotably by constituting a pivoting shaft by the shaft portion 58A, and the projected portion 58 is axially supported erectably by constituting a support shaft by the shaft portion 58A. Further, there is constructed a constitution in which the push down end portions 56F are arranged to cover the containing projected portions 58B at portions of a circumferential portion of the disk hole inserting portion 56 in correspondence with a plurality of the projected portions 58.

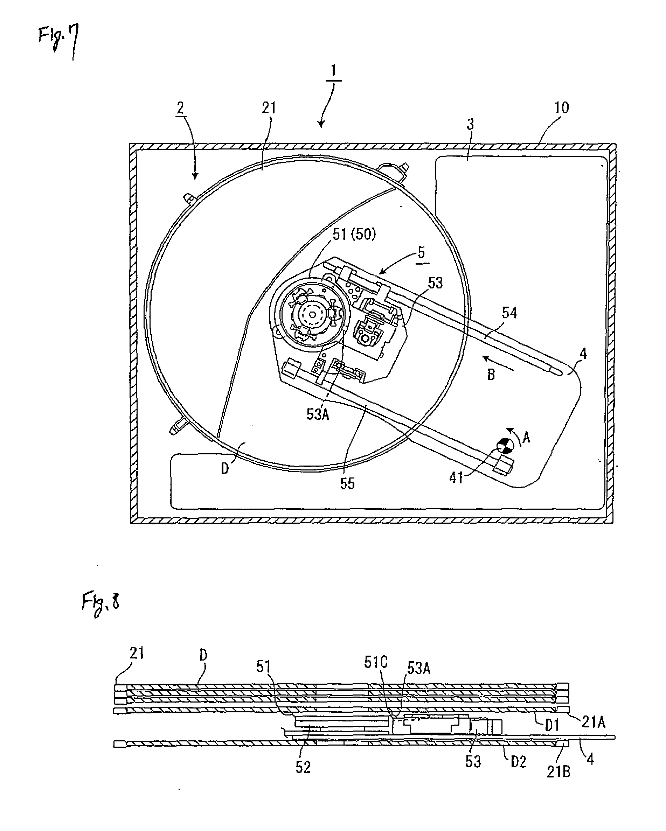

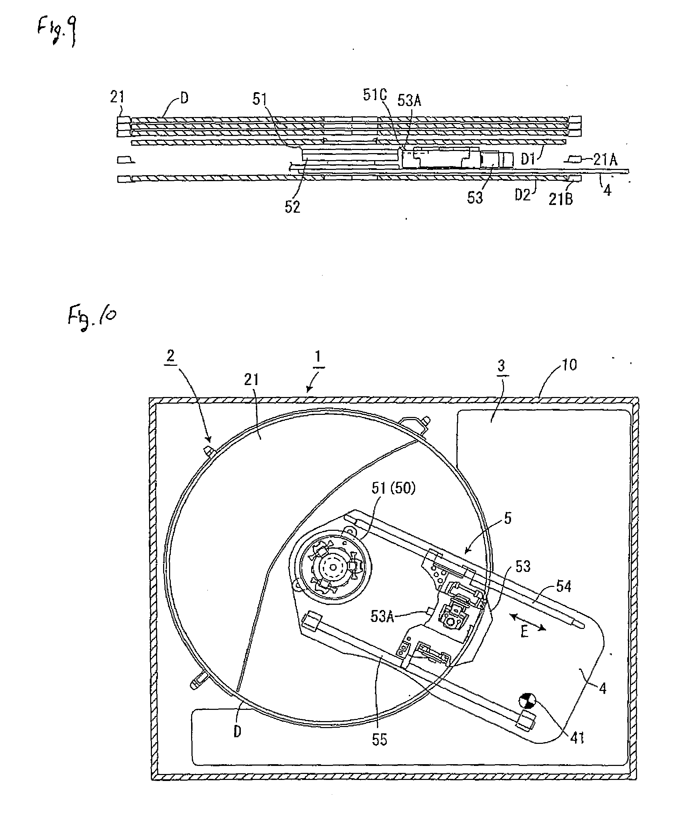

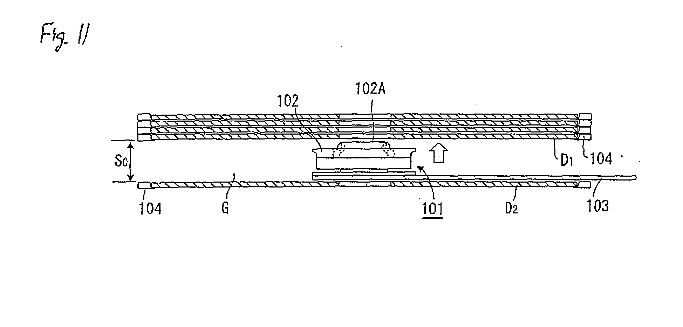

Next, an explanation will be given of operation of the disk changer apparatus 1 according to the embodiment.
(A1) First, the disk changer apparatus 1 opens an interval between a previously selected desired tray 21A (refer to Fig.6) and a tray 21B (refer to Fig. 6) right therebelow by tray leg opening means, not illustrated, thereafter, moves the chassis 4 to a predetermined position in the direction indicated by the arrow mark A relative to the base 3 of the cabinet 10. That is, the chassis 4 is pivoted relative to the base 3 from a position shown in Fig.1 to a position shown in Fig.7.
   Thereby, a loading apparatus 50 on the chassis 4 is made to advance to a space between the desired tray 21A and the tray 21B right therebelow.
(A2) At this occasion also the pickup 53 is made to advance to the space between the desired tray 21A and the tray 21B right therebelow. As shown by Fig.6, the pickup 53 is disposed at a position at which the rotation stopper portion 53A at a front end thereof is engaged with the groove portion 51C of the outer peripheral face of the turn table 51 and therefore, the operation of rotating the turn table 51 is hampered (rotation lock).
   Further, up to the stage, as shown by Fig. 2 (B), the disk hole inserting portion 56 is escaped to a height (level) position at which the disk hole inserting portion 56 is not projected from the disk mounting face 51B of the turn table 51 and also a plurality of projected portions 58 are at standby in a state of being contained at inside of the disk hole inserting portion 56.
(A3) Next, as shown by Fig.8, the desired tray 21A is moved down to the turn table 51 and the disk D1 is mounted on the turn table 51. Further, at this occasion, as shown by Figs.3 (A), (B), the projected portion 58 is contained at inside of the turn table 51 in a state in which the projected portion 58 is not projected to the face of the turn table 51 for mounting the disk.
(A4) Here, in the state of mounting the disk D1 on the turn table 51, by driving to rotate the rotation driving means 52 (refer to, for example, Fig. 2(B)), the screw member 57 fixedly attached to the front end portion (upper end portion of Fig. 2 (B)) of the rotation center shaft 52A starts rotating.
(A5) In this case, the turn table 51 is brought into a state in which the rotating operation is temporarily hampered (rotation lock state) and therefore, when the screw member 57 starts rotating, by operation of the male screw portion 57A formed at the outer peripheral face of the screw member 57 and the female screw portion 56A screwed to the male screw portion 57A, the rotational force from the rotation driving means 52 is converted into a push up force for pushing up the disk hole inserting portion 56, and the disk hole inserting portion 56 is moved up in the direction of being projected from the disk mounting face 51B of the turn table 51. Thereby, the disk hole inserting portion 56 is projected as shown by Figs.5(A), (B) from the state of Figs.3(A), (B).
(A6) Further, in accordance with the upper face movement, the disk hole inserting portion 56 is inserted into the center hole D₀ of the desired disk D.
   Further, in accordance with the movement of the disk hole inserting portion 56, also a pressing end portion 56C of the urging portion of the urging portion 56 installed at an upper portion of the disk hole inserting portion 56 is moved up as shown by Fig.5(A) from the state of Fig.3 (A). By moving up the pressing end portion 56C, a rear portion of the projected portion 58 is pushed up to operate to erect the projected portion 58. That is, the projected portion 58 is started to pivot in the counterclockwise direction of the drawing from a lie down state shown in Figs.3 (A), (B) to be operated to erect as shown by Figs.5(A), (B). In this way, the disk D is integrally fixed with the turn table 51 by pressing a peripheral wall and an upper face of the center hole D₀ of the desired disk D by the projected portion 58 from an upper vertical direction relative to the disk mounting face 51B
(A7) Thereafter, as shown by Fig.9, the tray 21A is operated to move down further to escape contact with the disk D. Here, the tray 21 is formed in a shape by which an upper face opening thereof is not brought into contact with the disk upper face and therefore, even when the tray 21 is moved down after fixing the disk D to the turn table, there is not posed a problem of damaging the disk D.
(A8) Next, by operating to drive the lead screw 54, the pickup 53 is moved back from the desired disk D mounted on the turn table 51 by a predetermined distance in a direction on an outer side in a radius direction thereof. Then, the rotation stopper portion 53A at the front end of the pickup 53 is disengaged from the groove portion 51C of the turn table 51 and therefore, rotation lock of the turn table 51 is released to be brought into a free state and the disk D starts rotating by the rotation drive force of the rotation driving means 52.
(A9) Thereafter, as shown by Fig.10, by moving the pickup 53 relative to the chassis 4 by a drive force of the lead screw 54 in a direction indicated by an arrow mark E (radius direction of the disk D (direction of traversing tracks)), the playing portion 5 is disposed on a desired track to reproduce (play) or record recorded information.
   Further, according to the disk changer apparatus 1 of the embodiment, when it is intended to interchange the disk D mounted on the turn table 51 to other disk and newly reproduce (play) or record the recorded information of the disk D or discharge the disk D from the turn table 51, the following operation is carried out.
(B1) First, rotation of the disk D by the rotation driving means 52 is stopped.
(B2) Next, the pickup 53 is moved to advance to a center portion in the radius direction of the disk D along the direction indicated by the arrow mark B relative to the chassis 4 up to a location at which the rotation stopper portion 53A of the pickup 53 is engaged with the groove portion 51C of the turn table 51, that is, up to the state shown in Fig. 7. Then, as shown by Fig.9, the pickup 53 is disposed at a position at which the rotation stopper portion 53A at the front end is engaged with the groove portion 51C of the outer peripheral face of the turn table 51 and therefore, the rotating operation of the turn table 51 is hampered (rotation lock).
(B3) Further, in the state of locking rotation of the turn table 51, an operation reverse to that of (A7) is carried out, that is, the tray 21A is moved up and as shown by Fig.8, operation of moving up the tray 21 is stopped at the position of mounting the disk D on the tray 21.
(B4) Thereafter, again, the rotation driving means 52 is driven, however, the rotation center axis 52A is rotated in a direction reverse to that of (A4). Then, by operation of the male screw portion 57A of the screw member 57 and the female screw portion 56A screwed to the male screw portion 57A, the rotational force from the rotation driving means 52 is converted into a force of moving down the disk hole inserting portion 56 and the disk hole inserting portion 56 is moved down in the lower direction. Thereby, the disk hole inserting portion 56 is moved down as shown by Figs.3(A), (B) from the state of Figs. 5 (A), (B) so as not to be projected from the disk mounting face 51B and is contained at inside of the turn table 51.
(B5) Here, in accordance with downward movement of the disk hole inserting portion 56, as shown by Fig. 5 (B) to Fig. 3 (B), the plurality of projected portions 58 are pivoted in the clockwise direction reverse to the arrow mark C direction shown in Fig.2 (B), by pushing down the containing projected portions 58B by the push down end portions 56F integrally formed with the disk hole inserting portion 56 to bring about a state of containing the containing projected portions 58B at inside of the disk hole inserting portion 56 as shown by Figs. 3 (A), (B), the projected portions 58 are made to fall down and the projected portions 58 are contained at inside of the turn table 51.
(B6) Thereby, the disk hole inserting portion 56 is escaped from the center hole D₀ of the disk D1 mounted on the turn table 51. Under the state, the tray 21A is moved up further to shift the state shown in Fig.6.
(B7) Further thereafter, in Fig.7, the chassis 4 is pivoted in the direction reverse to the arrow mark A direction centering on the pivoting shaft 41. That is, by pivoting the chassis 4 in the clockwise direction from the position shown in Fig. 7 to the position shown in Fig. 1 to return to an original state, the loading apparatus 50 and the pickup 53 mounted on the chassis 4 can be discharged from an interval between the trays 21A, 21B (refer to Fig.6).

Thereby, the disk D can be discharged from the turn table 51. Further, by carrying out the series of operation (A1) through (A8) after interchanging the disk D to other disk, recorded information of the disk D can be reproduced (played) or recorded newly.

In this way, according to the disk changer apparatus 1 of the embodiment, by containing the disk hole inserting portion 56 to the turn table 51 in a state of being able to be moved up and down relative to the disk mounting face 51B, a height dimension of the space S (refer to Fig. 6) to be ensured between the desired tray 21 and a tray can be reduced and therefore, thin-sized formation of a total of the apparatus of the disk changer apparatus 1 can be achieved.

Further, although according to the embodiment, the chassis 4 is constituted to be operated to pivot relative to the base 3, according to the invention, the chassis 4 is not limited to move to pivot but may be constituted to carry out various moving modes, for example, motion of translation motion or the like.

Further, the disk holding apparatus of the invention is applicable to various disk apparatus other than the disk changer apparatus 1 of the embodiment, for example, to an apparatus of recording information to a disk or the like.

Although an explanation has been given of the invention in details and in reference to the specific embodiment, it is apparent for the skilled person that the invention can variously be changed or modified without deviating from the spirit and the range of the invention.

The application is based on Japanese Patent Application (Japanese Patent Application No.2004-017010), filed on January 26, 2004 and a content thereof is incorporated herein by reference.

### <Industrial Applicability>

The disk holding apparatus of the invention achieves an effect of capable of reducing an inserting space to be ensured between desired trays and capable of constituting a total of the apparatus by thin-sized formation by containing the disk hole inserting portion to be able to move up and down relative to the face in the turn table for mounting the disk, and is particularly useful for the disk apparatus for recording and/or reproducing information to and from a disk of CD, DVD or the like and as the disk changer apparatus having the disk apparatus or the like.

## Claims

1. A disk holding apparatus comprising a turn table for mounting a disk and a disk hole inserting portion provided at a center portion of the turn table for being inserted into a center hole of the disk;
wherein the disk hole inserting portion is provided at the turn table in a state of being able to move up and down relative to a face of the turn table for mounting the disk.

2. The disk holding apparatus according to Claim 1, further comprising:
rotation driving means for rotating the turn table;
wherein the disk hole inserting portion is inwardly inserted with converting means for converting a rotational force from the rotation driving means to a force of moving up and down the disk hole inserting portion.

3. The disk holding apparatus according to Claim 2, wherein the converting means includes a screw member for screwing a side of the driving means and a side of the disk hole inserting portion.

4. The disk holding apparatus according to Claim 2 or 3,
wherein the converting means comprises:
a female screw portion formed at a peripheral face of an inner hole provided at the disk hole inserting portion;
a male screw portion formed at an outer peripheral face of the screw member and screwed to the female screw portion; and
rotation stopping means for temporarily stopping an operation of rotating the turn table.

5. The disk holding apparatus according to any one of Claims 1 through 4, further comprising fixing means for fixing the disk on the turn table by being erected in accordance with an operation of moving up the disk hole inserting portion and releasing a state of fixing the disk by lying down at inside of the turn table in accordance with an operation of moving down the disk hole inserting portion.

6. A disk changer apparatus comprising:
a plurality of trays for containing disks;
turn table transferring means for moving a turn table for mounting a disk at a lower portion of one tray of the plurality of trays; and
the disk holding apparatus according to any one of Claims 1 through 5.
